# EUROPEAN PATENT SPECIFICATION

(11) **EP 1 374 692 B1**
(45) Date of publication and mention of the grant of the patent: **13.04.2005**
(21) Application number: 03077806.2
(22) Date of filing: 19.04.2000
(51) Int. Cl.: A23G 1/00, A23G 3/00, A23G 3/22

(54) **Confectionery coatings**
Konfektüberzugsmittel
Couvertures de confiserie

(30) Priority: 22.04.1999 GB 9909276; 28.07.1999 GB 9917657; 27.08.1999 GB 9920303; 22.10.1999 GB 9924925
(43) Date of publication of application: 02.01.2004
(62) Divisional of application: 00920915.6
(73) Proprietor: APV Systems Limited, Peterborough PE4 7AP (GB)
(72) Inventor: Brown, Peter Arthur, Chesterfield S42 5DN (GB); Prange, Anthony John, Peterborough PE3 3QE (GB); Coulthard, Roger David, Peterborough PE8 6XB (GB)
(74) Representative: Lomas, Geoffrey Michael

(56) References cited:
- EP-A- 0 322 952
- WO-A-95/15699
- DE-A- 2 653 018
- US-A- 2 883 286
- US-A- 3 535 517
- US-A- 4 032 667
- US-A- 4 661 366

## Description

This invention relates to the production of confectionery coatings and particularly to the production of coatings containing gaseous bubbles, such as chocolate coatings containing bubbles of air. The bubbles are generally microscopic, that is they are not readily detected by the unaided human eye.

Methods for producing aerated chocolate bar fillings are well known, and such chocolate bars are popular. There appears, however, to be no satisfactory production process for making and applying an aerated confectionery coating having a substantially unblemished outer surface, that is a surface that is not interrupted by broken bubbles. Additionally the presence of bubbles should not readily be detected within the coating mass.

Specification no. GB 1297579 proposed a special chocolate composition for use in an aerated chocolate coating. It was proposed to incorporate up to 5% by weight of one or more polyglycerol ester emulsifiers in a chocolate composition to assist in foaming the hot chocolate with air, and to stabilise the foamed chocolate during subsequent handling of the liquid mass. Only laboratory tests are described; no production equipment is described.

Chocolate coating processes, such as enrobing processes, are generally aimed at avoiding and removing any air bubbles.

The present invention is aimed primarily at providing a coating method and apparatus that is capable of being used to provide aerated coatings of substantially conventional chocolate compositions, but the invention can in many cases be used to produce coatings of other confectionery materials containing gaseous bubbles.

The coating processes of the invention may be used to coat biscuits, confectionery items such as soft centres, bar combinations, frozen confectionery items, cakes and setting yoghurts etc.

The invention is particularly applicable to enrobing processes in which the product to be coated passes through a curtain of coating material, but it should be appreciated that the coating head may be employed to coat the product in other ways, such as by spraying or by feeding a bath of coating material in which the product is dipped, the excess coating material on the product being removed by the usual methods.

Where the context admits, the term 'aerated' will be used herein to cover bubbles containing gases other than air. For example, bubbles of nitrogen may be used.

According to a first aspect of the invention there is provided a process for producing an aerated confectionery coating is characterised in that it comprises supplying a liquid confectionery material to a coating head, maintaining the material under substantial super-atmospheric pressure up to the vicinity of the coating head, and forming, by gas injection, gaseous bubbles in the pressurised confectionery material prior to the confectionery material reaching the coating head, the rate of injection of gas into the confectionery material being controlled in response to a measure of the density of confectionery material in the supply to the coating head, excess liquid confectionery material available after coating by the coating head being recirculated into said supply.

The density of the confectionery material being fed in said supply to the coating head will depend amongst other things on the volume of excess aerated coating material that has been recirculated from the coating head. In general, with conventional coating processes when coating a series of discrete items there is a substantial excess of coating material that has to be recirculated. This will generally be the case also with the inventive process, and the process in accordance with the first aspect of the invention is concerned with controlling the aerator to take account of the fact that fresh coating material being supplied from the material source is not aerated, whereas the recirculated material is generally still at least partially aerated.

Preferably the density measurement is made at a position in the pressurised supply that is downstream of the aeration device.

The aeration device may then be controlled also in response to a measure of the density of the confectionery material in the supply to the aeration device, ie upstream of the aeration device.

The aeration device is preferably an aerating head of the kind in which after injection the confectionery material is subjected to shearing forces in order to reduce the bubble size.

The pressure of the coating material in the outlet from the aeration device is preferably substantially in the range 2 to 10 atmospheres, above atmospheric pressure, and preferably substantially in the range 3 to 6 atmospheres above atmospheric pressure.

The pressure in the pressurised supply of confectionery material may be created by a back-pressure means in the form of a flow restrictor positioned in the vicinity of the coating head, just prior to the inlet thereof. This arrangement has the advantage that a coating head having a conventional open-to-atmosphere inlet may be used, and thus the invention may be used as a conversion to an existing enrobing facility whilst retaining the existing coating head.

A suitable form of flow restrictor may comprise a deformable duct and means for applying an external deforming force to the duct in a controlled manner so as to vary the cross-sectional bore of the duct.

Use of an open-to-atmosphere coating head inlet will generally lead to some loss of bubbles, and a preferred arrangement, subject to costs, is to provide a coating head which is so arranged as to generate a suitable back-pressure at the inlet of the coating head.

Preferably the coating head is suitable for creating a curtain of aerated coating material comprises an elongate manifold capable of withstanding an internal pressure of several atmospheres super-atmospheric, the manifold being provided with an inlet and with an elongate outlet slot extending for substantially the full length of the manifold, and the width of the slot being controlled by an adjustable gate.

The gate may be a rigid elongate member which is slidably adjustable in the transverse direction thereof to control the width of the outlet slot.

Alternatively the gate may be an inflatable tube, preferably a tube of flattened shape, the internal pressure of the tube being controllable to effect adjustment of the width of the outlet slot.

An inflatable tube has the advantage that the gate can act as an automatic pressure compensator, since an increase in manifold pressure will tend to collapse the tube so as to reduce the manifold pressure by opening up the manifold outlet slot.

Alternatively, other means may be used to apply a pressure to the manifold such as an air-actuated diaphragm or a piston within the manifold.

The manifold is preferably in the form of a tube with end caps, which preferably are both removable for cleaning purposes.

An excess pressure relief means is preferably provided on the manifold, preferably at the end thereof.

In one preferred embodiment the manifold is provided with an outlet roller which in part defines the outlet slot, and a roller scraper is provided externally of the manifold for removing confectionery material carried round by the roller, in order to create a curtain which hangs down from the scraper.

When it is desired to coat the underside of items as well as the top of the items then, as is well known in the conventional coating with chocolate, a trough can be positioned beneath the coating head, under a foraminous conveyor which conveys the items past the coating head, and various devices known in the art can be employed for applying the coating material in the trough to the underside of the items.

The present invention does, however, enable the underside of the conveyed items to be coated by employing a manifold beneath a foraminous conveyor with an outlet slot which is directed generally upwards and beneath the conveyor, the pressure in the manifold being sufficient to cause a ribbon of coating material to be extruded with an upward component of movement in order to contact the underside of the conveyed items. That manifold then constitutes said coating head.

Preferably an upwardly-inclined guide plate is provided adjacent to the manifold outlet slot for guiding the extruded ribbon of confectionery material in an upward direction from the manifold, and towards the underside of the receding items on the conveyor.

According to a second aspect of the invention there is provided apparatus for supplying a coating head with aerated liquid confectionery material, the apparatus comprising an aerator for aerating liquid in a material supply to the coating head with gaseous bubbles, characterised by a coating head flow restrictor for generating in use a substantial super-atmospheric pressure in the supply up to the vicinity of the coating head, and a density measuring device adapted to measure the density of the aerated liquid in the liquid supply, and to control the amount of aeration provided by the aerator in response to the measured density.

The aerated liquid may be used to create a coating, but may be used for other purposes.

The invention will now be further described, by way of example only, with reference to the accompanying drawings, in which:
**Figure 1** is a flow diagram of a typical prior art chocolate enrobing production facility,
**Figure 2A** is a schematic flow diagram of a chocolate coating production facility in accordance with the invention for coating items with an aerated chocolate coating,
**Figure 2B** is a partial flow diagram of a coating facility in accordance with the invention and which is a modification of the facility of Figure 2A to accommodate a substantially conventional coating head,
**Figure 3** is a perspective view of a coating head manifold in accordance with the invention and suitable for producing a curtain of aerated chocolate in the facility of Figure 2A,
**Figure 4** is a vertical cross-section of the manifold of Figure 3,
**Figure 5** is a cross-section similar to Figure 3 but of a manifold coating head incorporating an outlet roller,
**Figure 6** is a cross-section similar to Figure 4 but of a manifold assembly in which the outlet is defined in part by an inflatable tube,
**Figure 7** is an enlarged cross-sectional view of the tube of flattened form, shown in an unpressurised condition, employed in the assembly of Figure 6,
**Figure 8** is a schematic perspective view of an enrobing assembly in accordance with the invention for use with aerated chocolate and suitable for coating both the top and bottom of items carried by the foraminous conveyor,
**Figure 9** is a vertical cross-section of a coating head in the form of a manifold assembly for producing a ribbon of aerated chocolate for application to the underside of articles carried by the conveyor,
**Figure 10** is a side view, in section, of a flow restrictor suitable for positioning in the vicinity of an open-to-atmosphere coating head, and
**Figure 11** is a view in perspective of the deformable duct incorporated in the restrictor of Figure 10.

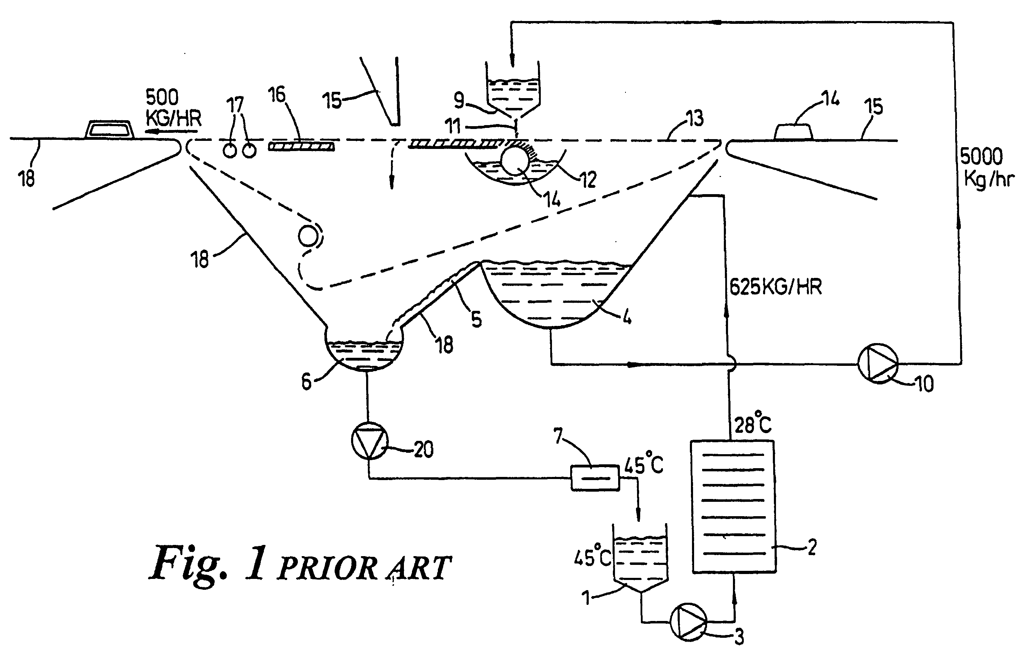

Referring firstly to Figure 1, this shows a typical prior art chocolate enrobing facility, and it will be helpful to consider this before discussing the subject invention. In Figure 1 a holding tank 1 is provided for freshly prepared chocolate melt (and also to contain some recirculated chocolate) which is then fed by a pump 3 through a tempering unit 2 to cool it and initiate controlled crystallisation, as is well known.

The tempered chocolate is fed, at a rate of typically 625 kg/hr to a main reservoir 4 of chocolate provided with an overflow 5 to a return reservoir 6 from which excess chocolate is returned by way of a heater 7 to holding tank 1.

The main reservoir 4 is the supply of chocolate for the coating head 9 to which the chocolate is pumped by pump 10 at a relatively high flow rate of about 5000 kg/hr, that is significantly greater than the rate (about 500 kg/hr) that fresh chocolate is being provided in holding tank 1.

A curtain 11 of chocolate flows down towards a trough 12 and a foraminous, wire conveyor 13 carries items to be coated, such as biscuits 14 from an infeed conveyor 15, through the curtain 11 whereby a chocolate coating is deposited on the top and sides of the biscuits, and surplus chocolate runs into the trough 12. Various devices are known for picking up chocolate from trough 12 to coat the underside of the items on conveyor 13, and a typical roller 14 applicator is shown.

Excess chocolate is removed from the coated biscuits by means of one or more of the following devices: (i) blower 15; (ii) shaker 16 and (iii) licking rolls 17.

The coated biscuits then pass to a discharge conveyor 18. The excess chocolate removed by devices 15, 16 and 17 will be directed by inclined walls 18 into the return reservoir 6, and typically a quantity of 125 kg/hr is returned by pump 20 to the holding tank 1.

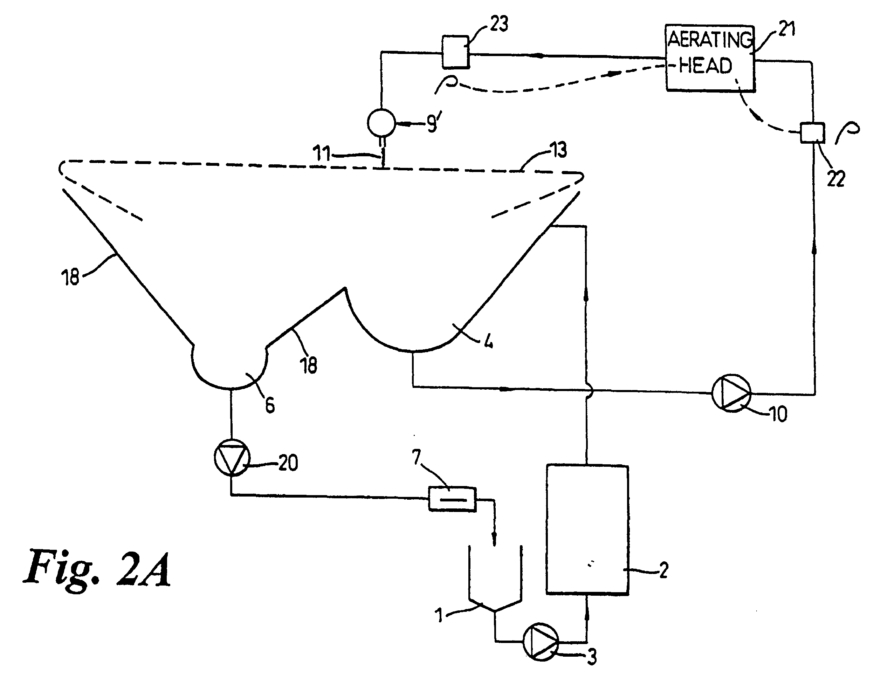

Figure 2A shows a modified chocolate enrobing facility in accordance with the invention, in so far as Figure 2A shows the changes that are required to the facility of Figure 1 in order to produce an aerated chocolate coating on the upper surface of items carried by the foraminous conveyor. System parts correspond to those of the facility of Figure 1 have been corresponding reference numerals in Figure 2A.

In Figure 2A an aerating head 21 has been inserted into the supply to the coating head 9', pump 10 has been up-rated to pump chocolate at a similar rate of about 5000 kg/hr but against a substantially increased back pressure of typically 4 atmospheres above atmospheric pressure produced by the modified coating head 9'.

Aerating head 21 can be of the type as sold by Tanis Food Technology B.V., Chroomstraat, 8,3211 AS, Lelystad, The Netherlands under designation No TFT Aerator.

The rate of flow of air fed to the aerating head is controlled in response to measurements of chocolate density as provided by density measurement devices 22, 23 which monitor the chocolate density in the pressurised supply to the coating head 9'.

The aim of controlling the aerating head 21 is to produce a substantially constant density of aerated chocolate being supplied to coating head 9'.

The main control is provided by device 23 in the form of a negative feedback control function to aerating head 21.

The additional measurement device 22 which is upstream of the aerating head 21 will respond to changes in the quantity of air in the chocolate being returned from main reservoir 4 and cause some adjustment of the quantity of air being injected into the chocolate flowing through the aerating head 21.

The devices 22 and 23 are typically of the vibrating tube type, and for example suitable units are those available from PAAR Scientific Limited, 594 Kingston Road, Raynes Park, London SW20 8DN under designation DPR Density meter.

It will be appreciated however that other devices giving an indication of density may equally be used such as a colour meter (colour lightening with increasing aeration) or a viscometer (viscosity increasing with increasing aeration).

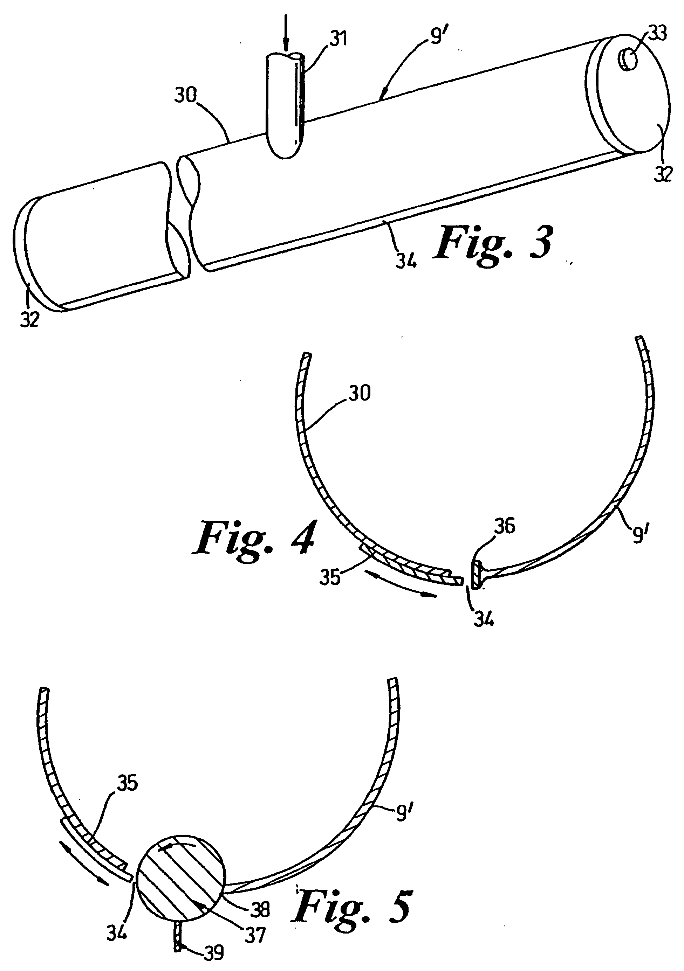

The measures taken in manifold assembly 9' to create a back pressure at the aerating head 21 are described hereafter with reference to Figures 3 and 4.

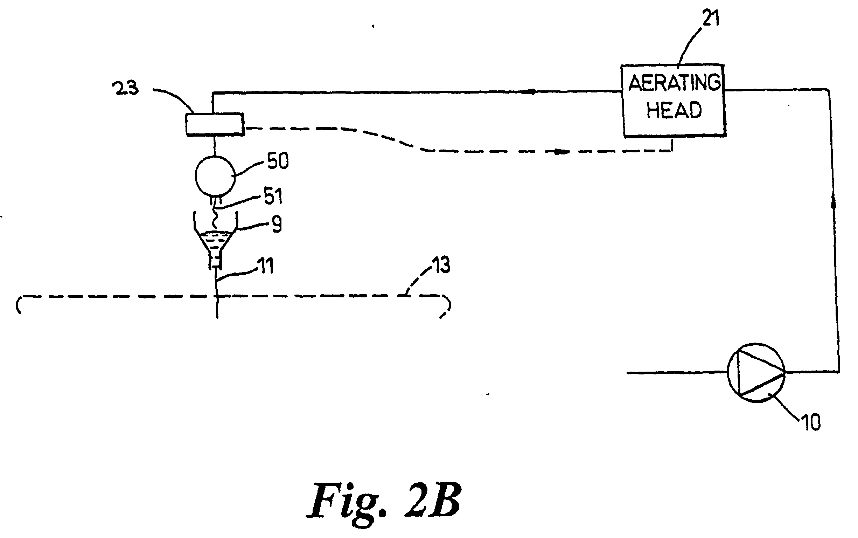

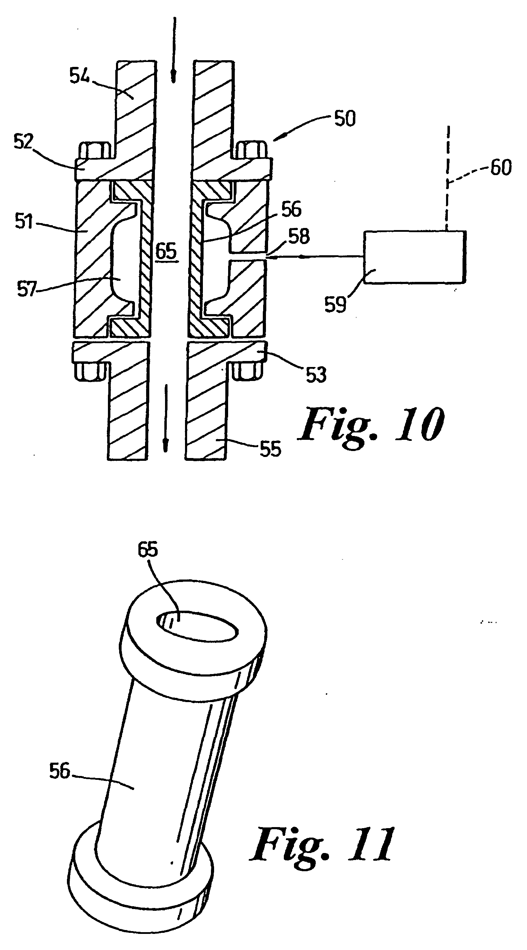

Figure 2B shows an arrangement suitable for use with a conventional hopper-type coating head 9, the hopper of which is open to the atmosphere. In order to maintain pressure in the supply of coating material up to the vicinity of the coating head 9, a flow restrictor 50 is provided just prior to the coating head 9, the outlet 51 of the flow restrictor 50 discharging directly into the hopper of the coating head 9 in order to minimise the loss of bubbles which might occur if a longer flowpath were to be provided from the flow restrictor means 50. A suitable flow restrictor is described hereafter with reference to Figures 10 and 11.

The arrangement shown in figure 2A produces an amplification of the amount of aeration applied by the aeration head to the amount of aeration which is present in the chocolate when applied to the product. This amplification is approximately in the ratio of the pump flow rate through the aerator head to the pump flow rate from the tempering unit and is due largely to the circulation of the chocolate through the coating unit. This amplification could be of particular advantage in applications requiring high levels of aeration (especially in the case of certain 'whipped chocolate' products).

Figure 3 shows a manifold 9' in the form of a stainless steel tube 30 provided with an inlet 31, removable end caps 32 being secured on the end of the tube 30, each end cap being provided with a respective pressure relief valve 33, the end caps being capable of withstanding a pressure differential of 8 Bar. The use of pressure relief valves 33 enables a positive displacement pump 10 to be employed. Valves 33 can be set typically at 4 Bar excess internal pressure.

An outlet slot 34 extends for the full length of the manifold and, as shown in Figure 4, the width of the outlet slot is determined by an elongate flow adjuster plate 35 of arcuate transverse cross-section, suitable releasable securing means, not shown, being provided to retain the plate 35 in sealing engagement with the outer surface of tube 30.

The slot 34 is thus defined between the free edge of plate 35 and a radial anvil plate 36 which assists in creating a curtain of aerated chocolate which hangs down from anvil plate 36.

In an alternative construction of manifold, not illustrated, the stainless steel tube 30 is provided in its underside with a series of holes, instead of a slot, the holes being of a suitable size and spacing to produce a curtain of chocolate.

Figure 5 shows a further alternative construction of manifold assembly in which slot 34 is defined between the free edge of a similar adjuster plate 35 and a driven roller 37 which is rotated in the sense to carry aerated chocolate through the slot 34. Roller 37 is in rubbing contact with the tube margin at 38.

A fixed scraper 39 is positioned directly below roller 37 to remove the chocolate from the roller thereby to create a curtain of aerated chocolate.

The arrangement of Figure 5 utilises a manifold pressure of approximately 4 Bar above atmospheric pressure.

Rollover of chocolate is minimised by the arrangements of Figures 3 to 5, thereby helping to preserve the integrity of the bubbles of air in the chocolate.

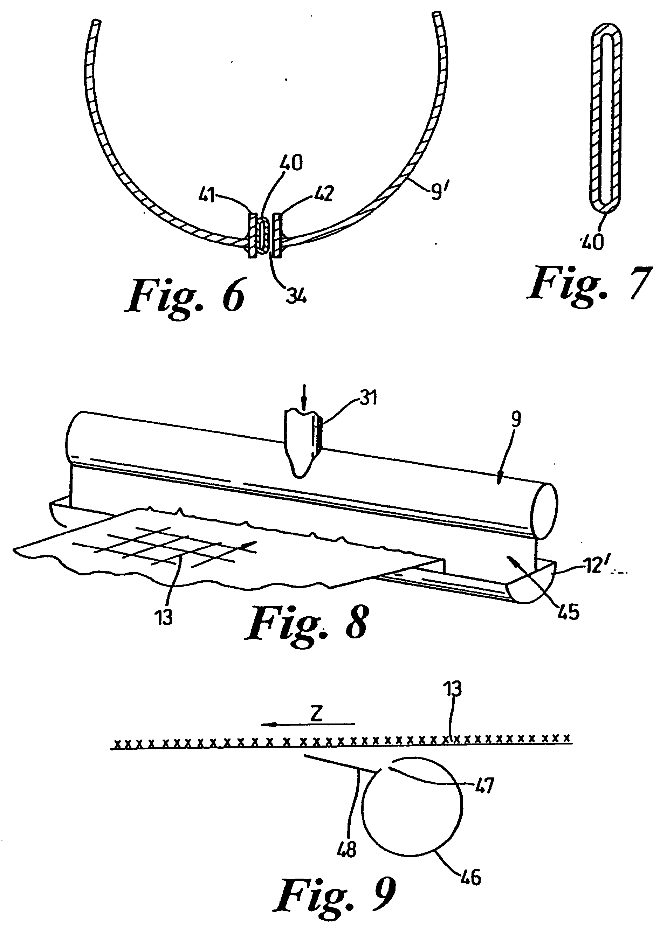

In Figure 6 an inflatable tube 40, of flattened form shown in Figure 7, defines one side of the outlet slot 34, the tube being bonded to one plate 41 of a pair of anvil plates 41, 42. The interior of the tube is subjected to a pressure for controlling the resistance to chocolate flowing through slot 34. The tube 40 can act as an automatic pressure relief valve since if the pressure inside the manifold tube 9' tends to rise then the tube 40 will become more flattened to allow slot width 34 to increase, thereby tending to relieve the manifold pressure.

Figure 8 shows a coating head assembly for producing an aerated coating over all surfaces of the items carried by foraminous conveyor 13. The coating head assembly comprises an elongate manifold 9' which can be of the form shown in the previous Figures, and produces a vertical curtain 45 of aerated chocolate of a length greater than the width of conveyor 13, a trough 12' of length substantially equal to that of manifold 9' being positioned beneath the conveyor path in order to collect the surplus curtain material, and then to provide a supply of aerated chocolate for coating the underside of the conveyed items, a suitable roller applicator, not shown, being located in trough 12'.

The excess length of the curtain relative to the width of the conveyor provides sufficient chocolate to the trough 45 to coat the underside of the items to the desired thickness of bottom coating.

When the manifold ends are provided with pressure relief valves, then the trough 45 should be of sufficient length to catch any surplus material from the relief valves, or a separate collection means should be provided to return the surplus material to return reservoir 6, Figure 2A.

Figure 9 shows a coating head in the form of a tubular manifold 46 positioned beneath a foraminous, wire conveyor 13, the manifold being provided in about the 10 o'clock position with an outlet slot 47 through which a ribbon of chocolate is extruded, the ribbon being guided upwardly and generally in the direction Z of conveyor travel by an inclined elongate guide plate 48, plate 48 extending close to the conveyor 13, whereby the chocolate ribbon is applied to the underside of items carried by the conveyor 13. This arrangement is suitable for providing an aerated chocolate coating on the underside of items to produce a 'half-coated' product.

Figures 10 and 11 together illustrate back-pressure means in the form of a flow restrictor 50 suitable for positioning in the vicinity of the coating head, just prior to the inlet thereof, as in Figure 2B.

The flow restrictor 50 comprises a tubular housing 51 clamped between flanged ends 52, 53 of a product inlet 54 and a product outlet 55. The housing 51 locates a deformable (rubber) duct 56 and defines a control chamber 57 surrounding the middle of the duct. A control passageway 58 connects the chamber 57 with a controllable source 59 of pressurised air. A signal line 60 is used to adjust air pressure within the chamber 57.

The duct 56 has a bore 65 of oval cross-section. In operation, an increase in control air pressure within the chamber 57 will tend to flatten the oval-section bore 65 of the deformable duct 56 so as to restrict product flow through the restrictor 50. Alternatively, a decrease in control air pressure within the chamber 57 will enlarge the cross-section of the bore 65 thus allowing product flow to increase.

Gas other than air may be used for control purposes. For example, pressurised nitrogen may be used.

The pressurised gas, (for example air or nitrogen) used to control the flow restrictor 50 is preferably the same as that used for aerating purposes and may then be connected to the same supply source of said gas.

## Claims

1. A process for producing an aerated confectionery coating is **characterised in that** it comprises supplying a liquid confectionery material to a coating head (9'), maintaining the material under substantial super-atmospheric pressure up to the vicinity of the coating head, and forming, by gas injection, gaseous bubbles in the pressurised confectionery material (21) prior to the confectionery material reaching the coating head (9'), the rate of injection of gas into the confectionery material being controlled in response to a measure (22, 23) of the density of confectionery material in the supply to the coating head (9'), excess liquid confectionery material available after coating by the coating head being recirculated into said supply (6, 1, 3, 2).

2. A process according to claim 1, wherein the gaseous bubbles are of generally microscopic size.

3. A process according to claim 1 or 2, wherein injection of gas into the pressurised confectionery material is by means of an aerator (21) controllable to take account that fresh coating material being supplied from the material source (4) is not aerated, whereas the recirculated material (6, 1, 3, 2) is generally still at least partially aerated.

4. A process according to any one of claim 1 to 3, wherein a density measurement is made at a position (23) in the pressurised supply that is downstream of the point (21) where aeration takes place.

5. A process according to any one of claims 1 to 4, wherein the aeration device is controlled in response to a measure of the density of the confectionery material at a point (22) upstream of where aeration takes place.

6. A process according to any one of claims 1 to 5, wherein after injection of gas the confectionery material is subjected to shearing forces in order to reduce gas bubble size.

7. A process according to any one of claims 1 to 6, wherein pressure of coating material after aeration is substantially in the range 2-10 atmospheres, above atmospheric pressure.

8. A process according to claim 7, wherein pressure of the coating material after aeration is in the range 3 to 6 atmospheres above atmospheric pressure.

9. A process according to any one of claims 1 to 8, wherein pressure in the pressurised supply of confectionery material is created by a back-pressure means (50) in the form of a flow restrictor positioned in the vicinity of the coating head (9'), just prior to the inlet thereof.

10. A process according to any one of claims 1 to 9, wherein the coating head (9') has an open-to-atmosphere inlet.

11. A process according to claim 10, wherein the flow restrictor (50) comprises a deformable duct (56) and means (57, 58, 59) for applying an external deforming force to the duct (56) in a controlled manner so as to vary the cross-sectional bore (65) of the duct.

12. A process according to any one of claims 1 to 11, wherein the coating head (9') comprises an elongate manifold (30) provided with an inlet (31) and with an elongate outlet slot (34) extending for substantially the full length of the manifold (30), the width of the slot (34) being controllable by an adjustable gate (35, 36).

13. A process according to claim 12, wherein the gate comprises a rigid elongate member (35) which is slidably adjustable in the transverse direction thereof to control the width of the outlet slot (34).

14. A process according to claim 13, wherein the gate comprises an inflatable tube (40), the internal pressure of the tube being controllable so as to effect adjustment of the width of the outlet slot.

15. A process according to any one of claim 12 to 14, wherein the manifold (30) comprises a tube provided with removable end caps (32).

16. A process according to any one of claims 12 to 15, wherein the manifold (30) is provided with an outlet roller (37) which in part defines the outlet slot (34), and a roller scraper (39) is provided externally of the manifold (30) for removing confectionery material carried round by the roller, in order to create a curtain of material which hangs down from the scraper.

17. A process according to any one of claims 1 to 16, provided with means for coating the underside of items as well as the top of the items, said means comprising a trough (12') positioned beneath the coating head (9') under a foraminous conveyor (13) which conveys the items past the coating head, and means (46) for applying the coating material in the trough to the underside of the items.

18. A process according to claim 17 wherein the means for coating the underside of the conveyed items comprise providing the manifold (30) disposed beneath the foraminous conveyor (13), with an outlet slot (47) which is directed generally upwards and beneath the conveyor (13), the pressure in the manifold (30) being made sufficient to cause a ribbon of coating material to be extruded with an upward component of movement in order to contact the underside of the conveyed items.

19. A process according to claim 18, wherein an upwardly-inclined guide plate (48) is provided adjacent to the manifold outlet slot (47) for guiding the extruded ribbon of confectionery material in an upward direction from the manifold (13), and towards the underside of the receding items on the conveyor.

20. Apparatus for supplying a coating head (9') with aerated liquid confectionery material, the apparatus comprising an aerator (21) for aerating liquid in a material supply to the coating head with gaseous bubbles, **characterised by** a coating head flow restrictor (35; 40; 56) for generating in use a substantial super-atmospheric pressure in the supply up to the vicinity of the coating head, and a density measuring device (22, 23) adapted to measure the density of the aerated liquid in the liquid supply, and to control the amount of aeration provided by the aerator in response to the measured density.

## Patentansprüche

1. Verfahren zur Herstellung eines belüfteten Süßwarenüberzugs, **dadurch gekennzeichnet, dass** es folgendes umfasst: Zuleiten flüssiger Süßwarenmasse zu einem Auftragskopf (9'), Halten der Masse unter einem beträchtlichen über dem Luftdruck liegenden Druck bis in die Nähe des Auftragskopfs und Ausbilden gasförmiger Blasen durch Gaseinleitung in die druckbeaufschlagte Süßwarenmasse (21), bevor die Süßwarenmasse den Auftragskopf (9') erreicht, wobei die Einleitrate von Gas in die Süßwarenmasse in Ansprechung auf eine Messung (22, 23) der Dichte der Süßwarenmasse in der Zuführung zu dem Auftragskopf (9') gesteuert wird, wobei überschüssige flüssige Süßwarenmasse, die nach dem Überziehen durch den Auftragskopf verfügbar ist, in die Zuführung (6, 1, 3, 2) umgewälzt wird.

2. Verfahren nach Anspruch 1, wobei die gasförmigen Blasen von im Allgemeinen mikroskopischer Größe sind.

3. Verfahren nach Anspruch 1 oder 2, wobei die Einleitung von Gas in die druckbeaufschlagte Süßwarenmasse mittels einer Belüftungseinrichtung (21) erfolgt, welche steuerbar ist, um zu berücksichtigen, dass von der Quelle (4) der Masse zugeleitete frische Überzugsmasse nicht belüftet ist, wogegen die umgewälzte Masse (6, 1, 3, 2) im Allgemeinen immer noch zumindest teilweise belüftet ist.

4. Verfahren nach einem der Ansprüche 1 bis 3, wobei eine Dichtemessung an einer Position (23) in der druckbeaufschlagten Zuführung durchgeführt wird, die sich stromabwärts von dem Punkt (21) befindet, an dem die Belüftung stattfindet.

5. Verfahren nach einem der Ansprüche 1 bis 4, wobei die Belüftungsvorrichtung in Ansprechung auf eine Messung der Dichte der Süßwarenmasse an einem Punkt (22) stromaufwärts der Stelle, an der die Belüftung stattfindet, gesteuert wird.

6. Verfahren nach einem der Ansprüche 1 bis 5, wobei die Süßwarenmasse nach der Gaseinleitung Scherkräften unterworfen wird, um die Größe der Gasblasen zu verringern.

7. Verfahren nach einem der Ansprüche 1 bis 6, wobei der Druck der Überzugsmasse nach dem Belüften im Wesentlichen im Bereich von 2-10 Atmosphären über dem Luftdruck liegt.

8. Verfahren nach Anspruch 7, wobei der Druck der Überzugsmasse nach dem Belüften im Bereich von 3 bis 6 Atmosphären über dem Luftdruck liegt.

9. Verfahren nach einem der Ansprüche 1 bis 8, wobei der Druck in der druckbeaufschlagten Zuführung der Überzugsmasse durch eine Rückstaueinrichtung (50) in Form eines in der Nähe des Auftragskopfs (9'), knapp vor dessen Einlass, positionierten Durchflusswiderstands erzeugt wird.

10. Verfahren nach einem der Ansprüche 1 bis 9, wobei der Auftragskopf (9') einen atmosphärisch offenen Einlass aufweist.

11. Verfahren nach Anspruch 10, wobei der Durchflusswiderstand (50) eine verformbare Leitung (56) und Mittel (57, 58, 59) zum Anwenden einer äußerlichen Verformungskraft auf die Leitung (56) in gesteuerter Weise zum Variieren der Querschnittsbohrung (65) der Leitung umfasst.

12. Verfahren nach einem der Ansprüche 1.bis 11, worin der Auftragskopf (9') einen länglichen Verteiler (30) umfasst, der mit einem Einlass (31) und einem länglichen Auslassschlitz (34) versehen ist, der sich im Wesentlichen die gesamte Länge des Verteilers (30) entlang erstreckt, wobei die Breite des Schlitzes (34) durch ein einstellbares Gatter (35, 36) steuerbar ist.

13. Verfahren nach Anspruch 12, wobei das Gatter ein starres längliches Element (35) umfasst, das in seiner Querrichtung zur Steuerung der Breite des Auslassschlitzes (34) verschiebbar einstellbar ist.

14. Verfahren nach Anspruch 13, wobei das Gatter ein aufblasbares Rohr (40) umfasst, wobei der Innendruck des Rohrs steuerbar ist, um die Einstellung der Breite des Auslassschlitzes zu bewirken.

15. Verfahren nach einem der Ansprüche 12 bis 14, wobei der Verteiler (30) ein mit entfernbaren Endkappen (32) versehenes Rohr umfasst.

16. Verfahren nach einem der Ansprüche 12 bis 15, wobei der Verteiler (30) mit einer Auslasswalze (37) versehen ist, die den Auslassschlitz (34) teilweise begrenzt, und ein Walzenschaber (39) außerhalb des Verteilers (30) zum Entfernen von Süßwarenmasse, die von der Walze rundherum mitgeführt wurde, vorgesehen ist, um einen Vorhang aus Masse, der von dem Schaber herunterhängt, zu erzeugen.

17. Verfahren nach einem der Ansprüche 1 bis 16, das mit Mitteln zum Überziehen der Unterseite von Stücken sowie der Oberseite von Stücken versehen ist, wobei die Mittel eine Wanne (12') umfassen, die unterhalb des Auftragskopfs (9') unter einem mit Öffnungen versehenen Förderband (13) positioniert ist, welches die Stücke an dem Auftragskopf vorbei befördert, sowie mit Mitteln (46) zum Aufbringen der Überzugsmasse in der Wanne auf die Unterseite der Stücke.

18. Verfahren nach Anspruch 17, wobei die Mittel zum Überziehen der Unterseite der beförderten Stücke folgendes umfassen: Versehen des Verteilers (30), der unter dem mit Öffnungen versehenen Förderband (13) angeordnet ist, mit einem Auslassschlitz (47), der im Allgemeinen nach oben und unter das Förderband (13) gerichtet ist, wobei der Druck in dem Verteiler (30) ausreichend hoch gemacht wird, so dass ein Streifen Überzugsmasse mit einer aufwärts führenden Bewegungskomponente extrudiert wird, um mit der Unterseite der beförderten Stücke in Kontakt zu kommen.

19. Verfahren nach Anspruch 18, wobei eine aufwärts geneigte Führungsplatte (48) benachbart dem Verteilerauslassschlitz (47) zum Führen des extrudierten Streifens Süßwarenmasse in Aufwärtsrichtung von dem Verteiler (13) und in Richtung der Unterseite der sich entfernenden Stücke auf dem Förderband vorgesehen ist.

20. Vorrichtung zum Versorgen eines Auftragskopfs (9') mit belüfteter flüssiger Süßwarenmasse, wobei die Vorrichtung folgendes umfasst: einen Belüftungseinrichtung (21) zum Belüften von Flüssigkeit in einer Massezuführung zu dem Auftragskopf mit gasförmigen Blasen, **gekennzeichnet durch** einen Auftragskopf-Durchflusswiderstand (35; 40; 56) zum Erzeugen eines beträchtlichen über dem Luftdruck liegenden Drucks während des Betriebs in der Zuführung bis in die Nähe des Auftragskopfs und eine Dichtemessungsvorrichtung (22, 23), die zur Messung der Dichte der belüfteten Flüssigkeit in der Flüssigkeitszuleitung und zur Steuerung der **durch** die Belüftungseinrichtung in Ansprechung auf die gemessene Dichte vorgesehenen Belüftungsmenge angepasst ist.

## Revendications

1. Procédé pour produire un enrobage aéré de confiserie, **caractérisé en ce qu'**il comprend les étapes d'envoyer une substance de confiserie liquide à une tête d'enrobage (9'), de maintenir la substance sous une pression sur-atmosphérique substantielle jusqu'au voisinage de la tête d'enrobage, et de former, par injection de gaz, des bulles de gaz dans la substance de confiserie sous pression (21) avant que la substance de confiserie n'atteigne la tête d'enrobage (9'), la vitesse d'injection du gaz dans la substance de confiserie étant réglée en fonction d'une mesure (22,23) de la densité de la substance de confiserie dans l'alimentation envoyée à la tête d'enrobage (9'), un excès de la substance de confiserie liquide disponible après l'enrobage effectué par la tête d'enrobage étant remis en circulation dans ladite alimentation (6,1,3,2).

2. Procédé selon la revendication 1, selon lequel les bulles de gaz possèdent une taille généralement microscopique.

3. Procédé selon la revendication 1 ou 2, selon lequel l'injection de gaz dans la substance de confiserie mise sous pression est réalisée à l'aide d'un dispositif d'aération (21) pouvant être commandé pour tenir compte du fait que de la substance d'enrobage fraîche délivrée par la source de substance (4) n'est pas aérée alors que la substance remise en circulation (6,1,3,2) est en général encore dans un état au moins partiellement aéré.

4. Procédé selon l'une quelconque des revendications 1 à 3, selon lequel une mesure de densité est effectuée dans une position (23) dans le système d'alimentation sous pression, qui est située en aval du point (21), où l'aération s'effectue.

5. Procédé selon l'une quelconque des revendications 1 à 4, selon lequel le dispositif d'aération est commandé en réponse à une mesure de la densité de la substance de confiserie en un point (22) en amont de l'endroit où l'aération s'effectue.

6. Procédé selon l'une quelconque des revendications 1 à 5, selon lequel après l'injection du gaz, la substance de confiserie est soumise à des forces de cisaillement pour réduire la taille des bulles de gaz.

7. Procédé selon l'une quelconque des revendications 1 à 6, selon lequel la pression de la substance d'enrobage après aération se situe sensiblement dans la gamme de 2-10 atmosphères, au-dessus de la pression atmosphérique.

8. Procédé selon la revendication 7, selon lequel la pression de la substance d'enrobage après aération se situe dans la gamme de 3 à 6 atmosphères au-dessus de la pression atmosphérique.

9. Procédé selon l'une quelconque des revendications 1 à 8, selon lequel la pression dans le système d'alimentation sous pression de la substance de confiserie est créée par des moyens de contre-pression (50) se présentant sous la forme d'un étranglement d'écoulement disposé au voisinage de la tête d'enrobage (9'), juste avant son entrée.

10. Procédé selon l'une quelconque des revendications 1 à 9, selon lequel la tête d'enrobage (9') possède une entrée ouverte à l'atmosphère.

11. Procédé selon la revendication 10, selon lequel le limiteur d'écoulement comprend un conduit déformable (56) et des moyens (57, 58, 59) pour appliquer une force externe de déformation au conduit (56) d'une manière commandée afin de modifier l'ouverture en coupe (65) du conduit.

12. Procédé selon l'une quelconque des revendications 1 à 11, selon lequel la tête d'enrobage (9') comprend un collecteur allongé (30) pourvu d'une entrée (31) et d'une fente de sortie allongée (34) s'étendant sensiblement sur toute la longueur du collecteur (30), la largeur de la fente (34) pouvant être commandée au moyen d'une porte réglable (35,36).

13. Procédé selon la revendication 12, selon lequel la porte comprend un élément allongé rigide (35) qui peut être ajusté par glissement dans sa direction transversale pour régler la largeur de la fente de sortie (34).

14. Procédé selon l'une quelconque des revendications 13, selon lequel la porte comprend un tube gonflable (40), la pression à l'intérieur du tube pouvant être commandée de manière à réaliser l'ajustement de la largeur de la fente de sortie.

15. Procédé selon l'une quelconque des revendications 12 à 14, selon lequel le connecteur (30) comprend un tube pourvu de capuchons d'extrémité amovibles (32).

16. Procédé selon l'une quelconque des revendications 12 à 15, selon lequel le collecteur (30) est pourvu d'un rouleau de sortie (37) qui définit en partie la fente de sortie (34), et une racle de rouleau (39) est prévue à l'extérieur du collecteur (30) pour retirer la substance de confiserie entraînée par le rouleau de manière à créer un rideau de substance qui pend à partir de la racle.

17. Procédé selon l'une quelconque des revendications 1 à 16, équipé de moyens pour enrober la face inférieure d'articles ainsi que la partie supérieure des articles, lesdits moyens comprenant une auge (12') disposée au-dessous de la tête d'enrobage (9') au-dessous d'un convoyeur ajouré (13), qui fait passer les articles devant la tête d'enrobage, et des moyens (46) pour appliquer la substance d'enrobage dans l'auge, à la face inférieure des articles.

18. Procédé selon l'une quelconque des revendications 17, selon lequel les moyens d'enrobage de la face inférieure des articles convoyés comprend les étapes de pourvoir le collecteur (30) disposé au-dessous du convoyeur ajouré (13), d'une fente de sortie (47) qui est dirigée d'une manière générale vers le haut et au-dessous du convoyeur (13), la pression dans le collecteur (30) étant réglée à une valeur suffisante pour provoquer l'extrusion d'un ruban de la substance d'enrobage, avec une composante ascendante de déplacement de manière à venir en contact avec la face inférieure des articles convoyés.

19. Procédé selon la revendication 18, selon lequel une plaque de guidage (48) inclinée vers le haut est prévue au voisinage de la fente de sortie (47) du collecteur de manière à guider le ruban extrudé de substance de confiserie dans une direction ascendante à partir du collecteur (13) et en direction de la face inférieure des articles descendant sur le convoyeur.

20. Dispositif pour alimenter une tête d'enrobage (9') avec une substance de confiserie liquide aérée, le dispositif comprenant un dispositif d'aération (21) pour aérer un liquide dans une alimentation de substance envoyée à la tête d'enrobage avec des bulles de gaz, **caractérisé par** un limiteur d'écoulement (35;40;56) de la tête d'enrobage pour la production, en cours d'utilisation, d'une pression sur-atmosphérique substantielle dans l'alimentation jusqu'au voisinage de la tête d'enrobage, et un dispositif (22,23) de mesure de densité adapté pour mesurer la densité du liquide aéré dans l'alimentation en liquide, et pour commander la quantité d'aération fournie par le dispositif d'aération en réponse à la densité mesurée.
